# EUROPÄISCHE PATENTSCHRIFT

(11) **EP 3 398 993 B1**
(45) Veröffentlichungstag und Bekanntmachung des Hinweises auf die Patenterteilung: **06.11.2019**
(21) Anmeldenummer: 18169471.2
(22) Anmeldetag: 26.04.2018
(51) Int. Cl.: C08L 53/02, C08L 23/14, C08K 3/08, A47K 7/00, B08B 1/00

(54) **POLYMER-METALL-FORMKÖRPER ZUR DESODORIERUNG VON OBERFLÄCHEN UND LUFT**
POLYMER METAL FORM BODY FOR DEODORISING OF SURFACES AND AIR
CORPS MOULÉ DE POLYMÈRE-MÉTAL DESTINÉ À DÉSODORISER DES SURFACES ET DE L'AIR

(30) Priorität: 26.04.2017 DE 102017108989
(43) Veröffentlichungstag der Anmeldung: 07.11.2018
(73) Patentinhaber: Zielonka, Dirk, 42657 Solingen (DE)
(72) Erfinder: ZIELONKA, Dirk, 42657 Solingen (DE)
(74) Vertreter: Michalski Hüttermann & Partner Patentanwälte mbB

(56) Entgegenhaltungen:
- BR-A- 9 200 222
- CN-A- 106 566 070
- DE-A1- 10 001 728
- DE-U1-202005 012 709

## Beschreibung

Die vorliegende Erfindung betrifft einen Formkörper aufweisend mindestens eine oder bestehend aus einer Metall-Polymermischung zur Desodorierung der Luft, von Materialoberflächen und der Haut, ein Verfahren zu dessen Herstellung sowie eine Kit-of-parts-Zusammenstelleng enthaltend diesen Formkörper.

Der Fortschritt gerade in der Chemie hat in den letzten Jahrzehnten mit einem immer größeren Produktportfolio zur Verbesserung der hygienischen Umweltbedingungen beigetragen. Als Funktion des Anwendungssektors, beispielsweise der persönlichen Hygiene, der professionellen Reinigung sowie den Haushaltsreinigern, wurde dabei eine Vielzahl unterschiedlicher Substanzen in einer unüberschaubaren Menge an Zusammensetzungen vorgeschlagen, welche sowohl ästhetischen wie auch funktionalen Reinigungsaspekten im hohen Maße Rechnung tragen. In der Regel ist allen dieser Formulierungen gemein, dass sie äußerst wirksam sind, insbesondere Schmutz oder Gerüche entfernen können und zudem die mikrobiologische Last deutlich verringern. Nachteilig an diesen Produkten ist meistens jedoch, dass die technologische Wirksamkeit auf Kosten der Umwelt- oder Hautverträglichkeit erreicht wird. Dies ist von Belang, da der Anteil an Verbrauchern mit sensibler oder vorgeschädigter Haut in den letzten Jahren deutlich angestiegen ist.

Letzterer Aspekt ist insbesondere auf dem Gebiet der Entfernung unerwünschter Gerüche, der Desodorierung, zu beachten, denn üblicherweise wird eine solche Wirkung dadurch erreicht, indem der unangenehme Geruch durch einen weiteren, wohlriechenderen Duft überdeckt wird. Bekannt sind auch Methoden, in welchen die unerwünschten Duftstoffe durch weitere Chemikalien maskiert oder eingeschlossen werden. Beiden Methoden ist gemein, dass weitere Stoffe verwendet oder freigesetzt werden, welche ihrerseits ein nicht unerhebliches allergenes Potential aufweisen können.

In der Patentliteratur wurden deshalb Lösungen für eine physikalische Desodorierung vorgeschlagen, welche ohne die Freisetzung weiterer Substanzen z.B. in die Umgebungsluft auskommen. So offenbart beispielsweise die DE 100 01 728 A1 einen Reinigungskörper aus Edelstahl zum Reinigen der menschlichen Haut, insbesondere unter fließendem Wasser, mit wenigstens einem reinigungsaktiven Bereich. Dieser soll eine besonders gute geruchsentfernende Wirkung erzielen, indem der reinigungsaktive Bereich von einem zugänglichen Bereich der Oberfläche des Reinigungskörpers gebildet und der reinigungsaktive Bereich abschließend spanabhebend bearbeitet ist.

Nichtsdestotrotz besteht weiterhin der Bedarf an effektiven und kostengünstigen physikalischen Desodorierungslösungen, welche vielfältig einsetzbar sind und eine große Anzahl an unterschiedlichen, riechenden Substanzen von Oberflächen und aus der Luft entfernen können.

Es ist daher die Aufgabe der vorliegenden Erfindung, einen solchen desodorierenden Formkörper, ein Herstellungsverfahren und ein Kit-of-parts enthaltend diesen bereitzustellen.

Gelöst wird diese Aufgabe durch die Merkmale der unabhängigen Ansprüche. Weitere bevorzugte Ausgestaltungen sind in den Unteransprüchen wiedergegeben.

Zur Desodorierung fester Oberflächen und/oder der Luft kann erfindungsgemäß ein Formköper eingesetzt werden, wobei mindestens ein Teilbereich der Oberfläche des Formkörpers eine Metall-Polymermischung umfasst und die Metall-Polymermischung größer oder gleich 40 Gew.-% und kleiner oder gleich 80 Gew.-% eines thermoplastischen Styrol-Blockcopolymers, größer oder gleich 10 Gew.-% und kleiner oder gleich 50 Gew.-% eines Polypropylen Copolymers und größer oder gleich 5 Gew.-% und kleiner oder gleich 30 Gew.-% eines eisenhaltigen Metalls aufweist, und die Summe der angegebenen Komponenten der Metall-Polymermischung mindestens 80 Gew.-% beträgt. Überraschenderweise hat sich herausgestellt, dass ein Formkörper mit oben angegebener Zusammensetzung effektiv in der Lage ist, unerwünschte Gerüche von Oberflächen und aus der Luft zu entfernen. Dies ohne die Freisetzung weiterer Chemikalien auf die betroffenen Oberflächen und/oder die Raumluft. Die zur Geruchsentfernung nötigen Kontaktzeiten sind sehr kurz und können durch einen weiteren Zusatz von Flüssigkeiten, insbesondere Wasser, noch weiter verkürzt werden. Dieser Effekt ist insbesondere überraschend, da vergleichbare Produkte mit ähnlichen Eigenschaften über eine deutlich größere Menge an aktiven Material verfügen. Ohne durch die Theorie gebunden zu sein wird angenommen, dass die Metalle im Wesentlichen als Zentren zur Deaktivierung der unerwünschten Geruchsstoffe beitragen. Aufgrund der Tatsache, dass die kommerziell erhältlichen Produkte mit ähnlichen Wirkprinzip vollständig aus Metall hergestellt sind, ist natürlich der katalytisch aktive Metallgehalt deutlich höher. Die hier gefundene Lösung stellt also eine ähnliche Effizienz bei deutlich geringeren Metallgehalt bereit. Dies kann zu einer deutlichen Kostenreduktion und zudem zu Formkörpern führen, welche im Vergleich zu kommerziell erhältlichen Produkten ein deutlich geringeres Gewicht aufweisen. Ohne durch die Theorie gebunden zu sein ergibt sich die hohe Funktionalität des erfindungsgemäßen Formkörpers dadurch, dass durch die erfindungsgemäß eingesetzte Polymermischung auch ein Zutritt der unerwünschten Duftstoffe mit den eingesetzten Flüssigkeiten und/oder als Gas in tiefere Schichten des Formkörpers erfolgen kann. Es werden also nicht nur die Metalle in der obersten Schicht des Formkörpers aktiv an der Umsetzung der unerwünschten Stoffe beteiligt sind, sondern es stehen auch die tieferen Schichten des Formkörpers als aktive Zentren zur Umwandlung der Duftstoffe zur Verfügung. Dies ist vorteilhaft, da die Anzahl an katalytischen Zentren im Formkörper erhöht wird. Bei Formkörpern, welche ganz aus Metall bestehen, ist dies nicht der Fall. Des Weiteren wird angenommen, dass insbesondere die Mischung in den oben angegebenen Gew.-%-Bereichen der oben angegebenen Polymere zu dieser günstigen Eindringtiefe beiträgt. Insofern wird dieser Effekt nicht durch beliebige Polymere und insbesondere auch nicht durch beliebige Polymermischungen erreicht. Es ergeben sich überraschenderweise gute Ergebnisse bei Applikationen wie dem Händewaschen und der Desodorierung der Raumluft, wobei letztere insbesondere nach Benetzung der Formkörper mit einer Flüssigkeit zu sehr guten Ergebnissen führt. Applikationen auch ohne zusätzliche Benetzung führen aber auch zu überraschend guten Ergebnissen.

Für die erfindungsgemäßen Formköper sind grundsätzlich alle gut und einfach handhabbaren Abmessungen und Formen denkbar, insbesondere solche Abmessungen und Formen, die für herkömmliche Waschseifen verwendet werden. Eine bevorzugte Weiterbildung des erfindungsgemäßen Formkörpers besteht jedoch darin, dass dieser die Form einer kreisrunden oder einer ovalen Scheibe aufweist. Hat der erfindungsgemäße Formkörper die Form einer kreisrunden Scheibe ist es besonders bevorzugt, wenn auf wenigstens einer Flachseite der kreisrunden Scheibe - besonders bevorzugt auf beiden Flachseiten der kreisrunden Scheibe - ein kegelförmiger Abschnitt vorgesehen ist. Ein solcher kegelförmiger Abschnitt erleichtert die Handhabung des erfindungsgemäßen Formkörpers, da er sich auf diese Weise der Form der Handinnenfläche besonders gut anpasst, wodurch ein besonders intensiver und großflächiger Hautkontakt erzielt wird. Je größer und besser der Hautkontakt des erfindungsgemäßen Formkörpers ist, umso besser ist seine Wirkung zur Geruchsentfernung. Demgemäß wird eine besonders gute Wirkung des erfindungsgemäßen Formkörpers auch dann erzielt, wenn er linsenförmig ausgebildet ist. Insbesondere bei der Ausbildung des Formkörpers in der Form einer Scheibe oder einer Linse weist dieser mehrere Kanten auf. Solche Kanten sind der Desodorierenden Wirkung, d. h. der Wirkung bei der Geruchsentfernung durch den Formkörper, nicht abträglich. Jedoch führen Kanten dazu, dass sich der erfindungsgemäße Formkörper in der Hand unangenehm anfühlen und im schlimmsten Fall sogar zu kleinen Verletzungen der Hand führen kann. Insofern besteht eine bevorzugte Weiterbildung des erfindungsgemäßen Formkörpers darin, dass die Kanten des Formkörpers abgerundet sind. Dem- entsprechend können die Kanten auch gefast sein. Die oben beschriebenen, eher flachen Formen des erfindungsgemäßen Formkörpers haben den Vorteil, dass der Formkörper bei einer relativ großen möglichen reinigungsaktiven Fläche ein relativ geringes Gewicht aufweist. Im Gegensatz dazu sind die erfindungsgemäßen Reinigungskörper, die gemäß einer bevorzugten Weiterbildung der Erfindung kugelförmig oder eiförmig ausgebildet sind, für die im Vergleich kleinere Oberfläche, die sie bieten, etwas schwerer. Ein kugelförmiger oder eiförmiger Formkörper kann jedoch unter ästhetischen und designmäßigen Gesichtspunkten besonders ansprechend sein, sodass ein solcher kugelförmiger oder eiförmiger Formkörper z. B. ein besonderer Blickfang im Badezimmer ist.

Erfindungsgemäß wird mindestens ein Teilbereich der Oberfläche des Formkörpers durch die oben angegebene Metall-Polymermischung gebildet. Dies bedeutet, dass nicht der gesamte Formkörper aus der Metall-Polymermischung bestehen muss, sondern, dass auch Formkörper vorstellbar sind, bei denen nur ein Teil der gesamten Oberfläche des Formkörpers aus der Metall-Polymermischung besteht. Es ist aber auch möglich, dass der innere Kern des Formkörpers aus einem anderen Material ausgebildet ist und nur die Oberfläche des Formkörpers aus der erfindungsgemäßen Metall-Polymermischung besteht. Insofern ist es bevorzugt, dass die erfindungsgemäße Metall-Polymermischung sich auf der Oberfläche des Formkörpers befindet. Bevorzugt sollte zumindest 50 % der Oberfläche des Formkörpers, des Weiteren bevorzugt mindestens 75 % der Oberfläche des Formkörpers und weiteren bevorzugt mindestens die gesamte Oberfläche des Formkörpers aus der erfindungsgemäßen Metall-Polymermischung bestehen. Sofern nur ein Oberflächenbereich des Formkörpers durch die erfindungsgemäße Metall-Polymermischung gebildet wird, sollte die Schichtdicke des Oberflächenbereiches zumindest größer als 5 mm, insbesondere größer als 1 cm betragen. Ohne durch die Theorie gebunden zu sein wird angenommen, dass innerhalb dieser Schichtdicken eine effektive Umsetzung der unerwünschten Duftstoffe innerhalb kurzer Prozesszeiten erfolgen kann.

Als katalytisches Zentrum zur Desodorierung wird ein eisenhaltiges Metall eingesetzt. Dabei kann das eisenhaltige Metall entweder nur Eisen als Metall- oder eine Mischung unterschiedlicher Metalle mit Eisen als Hauptkomponente aufweisen. Letzteres bedeutet insbesondere, dass Eisen in einem Anteil von größer als 50 Mol-Prozent im Metall (bezogen auf eventuell weitere Metalle) vorliegt. Insbesondere ist es bevorzugt, dass Eisen zu 100 % (Verunreinigungen des Metalls mit anderen Metallen unter 1 mol% werden dabei vernachlässigt) die Metallkomponente des Metalls bildet. Eingesetzt wird dabei das Metall bevorzugt als Metallpulver. Dies bedeutet, dass insbesondere das Metall partikulär und nicht in ionischer Form als Salz vorliegt. Des Weiteren kann das bevorzugte eingesetzte Metallpulver eine mittlere Teilchengröße von größer oder gleich 100 nm und kleiner oder gleich 1 µm aufweisen. Innerhalb dieser Größenbereiche können sich die Pulverteilchen gut in den Polymeren lösen und es ergeben sich große katalytisch wirksame Oberflächen.

Die erfindungsgemäße Metall-Polymermischung besteht zumindest aus einem eisenhaltigen Metall und den beiden oben angegebenen Polymerklassen in den angegebenen Gewichtsrelationen. Das Metall liegt dabei in den Polymeren eingebettet vor. Dies bedeutet nicht zwangsläufig, dass die Metalle mit den Polymeren kovalent verbunden sind. Es ist auch möglich, dass das Metall nur schwach an die Polymere koordiniert ist. Es ist aber auch möglich, dass das Metall nur rein physikalisch im Polymer "gelöst" vorliegt.

Unerwünschte Duftstoffe im Sinne der Erfindung sind dabei alle natürlichen und synthetischen Riechstoffe oder Geruchsstoffe, welche olfaktorisch wahrgenommen einen Geruch entwickeln. Insbesondere fallen bei Raumtemperatur schwefelhaltige Verbindungen, wie beispielsweise Schwefelwasserstoff unter diese Definition.

Thermoplastische Styrol-Blockcopolymere (SBC) sind aus Polybutadien- oder Polyisopren und Polystyrolblöcken zusammengesetzte Polymere. Die Herstellung erfolgt zumeist durch lebende anionische Polymerisation. Es handelt sich um transparente Kunststoffe mit hoher Schlagzähigkeit. Die SBCs können in linearer oder sternförmiger Form vorliegen. Einsetzbare Vertreter diese Substanzklasse sind beispielsweise Styrol-Ethylen-Butylen-Styrol (SEBS), Styrol/Butadien-Styrol (SBS), Styrol-Ethylen/Propylen-Styrol (SEPS), Styrol-Isopren-Styrol (SIS) sowie Mischungen daraus. Nicht erfindungsgemäß ist der Einsatz thermoplastischer Polyurethane (TPE-U, TPU), thermoplastischer Vulkanisate (TPE-V, TPV), thermoplastische Copolyamide (TPE-A, TPA) sowie deren Mischungen.

Bei den Polypropylen-Copolymeren kann es sich Copolymere des Polypropylens mit Ethylen (EPM) oder mit Ethylen und Ethylidennorbonen, Dicyclopentadien oder 1,4-Hexadien (EPDM) handeln. Weiterhin kommen auch andere PP + Ethylen-Propylen-Dien (EPDM)-Blends als PP-Copolymere in Frage. Bevorzugt können die Polypropylen-Copolymere thermoplastische Eigenschaften aufweisen und isotaktisch sein. Dies kann die Diffusionstiefe der unerwünschten Geruchsstoffe positiv beeinflussen.

Erfindungsgemäß beträgt dabei die Summe der oben angegebenen Substanzen mindestens 80 Gew.-%. Die restlichen maximal 20 Gew.-% des Formkörpers können dabei durch üblicherweise verwendete weitere Substanzen gebildet werden, wie beispielsweise Farbpigmente, Füllstoffe, Modifikatoren oder ähnliches.

In einer bevorzugten Ausführungsform kann das thermoplastische Styrol-Blockcopolymer ein Styrol-Ethylen-Butylen-Styrol-Blockcopolymer (SEBS) sein. Insbesondere der Einsatz eines SEBS-Polymers kann zu einer hohen katalytischen Aktivität des Formkörpers beitragen. Ohne durch die Theorie gebunden zu sein, kann dies insbesondere daher rühren, dass das SEBS-Polymer eine geeignete Matrix darstellt, in welchen sich das Metall oder das Metallpulver sehr homogen und mit hoher Oberfläche löst. Des Weiteren kann es auch sein, dass bedingt durch die Dichte und durch die räumliche Struktur des SEBS-Polymers sich Löcher und Kanäle in der gesamten Polymermatrix ausbilden, welche die unerwünschten Duftstoffe auch in tiefere, oberflächenfemere Schichten leiten. Die unerwünschten Duftstoffe können derart mit einer größeren Anzahl an aktiven Metallen wechselwirken, was die katalytische Aktivität des gesamten Formkörpers erhöht.

In einer weiteren Ausgestaltung kann das Metall als Metallpulver vorliegen, welches größer oder gleich 50 Gew.-% und kleiner oder gleich 100 Gew.-% aus Edelstahl der Werkstoffnummern 1.4571, 1.4301 oder Mischungen daraus bestehen. Insbesondere Edelstahl der angegebenen Werkstoffnummern hat sich besonders effektiv in der Entfernung unerwünschter Gerüche erwiesen. Dies trifft insbesondere auf die weit verbreitete Klasse der Schwefelverbindungen zu, welche gerade im Haushaltsbereich ein Großteil der unerwünschten Duftstoffe ausmacht. Schon relativ kurze Kontaktzeiten des Formkörpers, entweder ohne oder benetzt mit einer Flüssigkeit wie zum Beispiel Wasser, führen zu einem schnellen Abbau dieser unerwünschten Verbindungen und somit zu einer effizienten Desodorierung entweder der Haut oder der Raumluft. Dieser Effekt lässt sich über eine lange Lebensdauer des Formkörpers nachweisen. Ohne durch die Theorie gebunden zu sein kann es sich dadurch ergeben, da der Edelstahl der oben angegebenen Werkstoffnummern nicht durch die unerwünschten Duftstoffe passiviert wird. Die Oberfläche des Metalls oder des Metallpulvers bleibt also immer katalytisch aktiv.

In einer weiteren Charakteristik kann der Formkörper aus der Metall-Polymermischung bestehen. Es hat sich als besonders günstig erwiesen, wenn der gesamte Formkörper aus der Metall-Polymermischung besteht. Zum einen werden durch diese Ausgestaltung besonders leichte Formkörpers erhalten. Zum anderen ergibt sich dadurch die Möglichkeit, dass die unerwünschten Duftstoffe besonders tief in den Formkörper eindiffundieren können. Auf diese Art und Weise ist ein Großteil der eingebrachten Metalle als katalytische Zentren zur Desodorierung zugänglich und man kann mit geringen Metallanteilen eine effiziente Reduzierung der unerwünschten Duftstoffe erreichen.

In einer weiteren Ausgestaltung kann die Metall-Polymermischung zumindest eines Teilbereiches des Formkörpers größer oder gleich 50 Gew.-% und kleiner oder gleich 70 Gew.-% des thermoplastischen Styrol-Blockcopolymers, größer oder gleich 20 Gew.-% und kleiner oder gleich 40 Gew.-% des Polypropylen Copolymers und größer oder gleich 7,5 Gew.-% und kleiner oder gleich 15 Gew.-% eines eisenhaltigen Metalls enthalten. Diese Metall-Polymer-Zusammensetzungen führen zu besonders mechanisch stabilen Zusammensetzungen entweder des gesamten Formkörpers oder der Teilbereiche des Formkörpers welche aus diese Zusammensetzung gebildet sind. Dies kann zur Langlebigkeit des Produktes beitragen. Andererseits scheint diese mechanische Stabilität nicht die Eindiffusion unerwünschter Duftstoffe in das Innere der Metall-Polymermischung zu behindern. Insofern können in kurzen Zeiten effektiv unerwünschte Duftstoffe von Oberflächen oder aus der Raumluft entfernt werden.

Innerhalb eines zusätzlichen Aspektes kann die Dichte des gesamten Formkörpers oder des Teilbereiches der Oberfläche des Formkörpers aufweisend die Metall-Polymermischung ermittelt nach DIN EN ISO 1183-1 (A) größer oder gleich 0,75 g/cm³ und kleiner oder gleich 1,25 g/cm³ betragen. Innerhalb dieses Dichtebereiches kann eine effiziente Reinigungsleistung des Formkörpers erreicht werden. Kleinere Dichten sind nicht bevorzugt, da dies zu einer ungenügenden mechanischen Stabilität des Formkörpers beitragen kann. Höhere Dichten können nachteilig sein, da in diesen Fällen eine nur ungenügende Diffusion der unerwünschten Duftstoffe in den Form Körper hinein erfolgen kann.

Innerhalb einer weiteren Ausführungsform kann der maximale Rauwert Rₐ der Oberfläche des Formköpers größer oder gleich 0,4 µm und kleiner oder gleich 25 µm betragen. Als die Oberfläche des Formkörpers wird dabei diejenige Oberfläche angesehen, welche die erfindungsgemäße Metall-Polymermischung aufweist. Dieser Rauwert kann dabei durch Verfahren eingestellt werden, welche dem Fachmann bekannt sind. Ohne durch die Theorie gebunden zu sein, hat sich innerhalb des oben angegebenen Bereiches die weitere Eindiffusion der unerwünschten Duftstoffe als besonders geeignet erwiesen. Insofern können die oben angegebenen Oberflächenwerte dazu beitragen, dass auch mit einem geringen Metallanteil im Polymer eine ausreichende Reduzierung der unerwünschten Duftstoffe erreicht wird. Größere Rauwerte können nachteilig sein, da sie die Optik des Formkörpers negativ beeinflussen. Kleinere maximale Rauwerte können dazu führen, dass sich die Diffusion der unerwünschten Duftstoffe in den Formkörper verschlechtert. Der maximale Rauwert wird dabei durch berührungslose Konfokaltechnik an mindestens 5 Punktes des Formkörpers aufweisend die erfindungsgemäße Zusammensetzung gemessen (z.B. mit dem Gerät µscan sensor der Firma NanoFocus).

Des Weiteren ist ein Verfahren zur Herstellung eines Formkörpers zur Desodorierung der Luft und/oder von Oberflächen erfindungsgemäß, welches mindestens die Schritte umfasst:
a) Herstellen einer physikalischen Mischung mindestens eines thermoplastischen Styrol-Blockcopolymers, eines Polypropylen Copolymers und eines eisenhaltigen Metallpulvers,
b) Aufschmelzen der physikalischen Mischung
c) Extrudieren der aufgeschmolzenen Mischung
d) Granulieren der erkalteten, extrudierten Mischung und
c) Formen eines Formkörpers oder eines Teiles eines Formköpers durch Spritzgießen des in Schritt d) erhaltenen Granulats. Durch dieses erfindungsgemäße Verfahren sind Formkörper erhältlich, welche eine lange Lebensdauer aufweisen und besonders effektiv unerwünschte Duftstoffe von Oberflächen oder aus der Raumluft entfernen. Das Herstellen der physikalischen Mischung in Schritt a) kann dadurch erfolgen, indem man die einzelnen Komponenten zusammen gibt und so lange vermischt, dass eine homogene Mischung entsteht. Das Aufschmelzen der physikalischen Mischung in b) erfolgt zweckmäßigerweise durch Wärmezufuhr oberhalb des höchsten Schmelzpunktes der Polymerkomponenten. Die geschmolzene Mischung kann dabei durch Rühren weiter homogenisiert werden. Das Extrudieren der homogenen Mischung kann mit und ohne weitere Wärmezufuhr erfolgen und kann in handelsüblichen Extrudern durchgeführt werden. Die mit üblichen Verfahren extrudierten Polymerstränge werden beispielsweise durch schneiden zerkleinert. Auf diese Art und Weise wird ein Metall-Polymergranulat erhalten. Dieses Granulat kann anschließend durch übliche Verfahren, insbesondere durch Spritzgießen, zu den erfindungsgemäßen Formkörpers verarbeitet werden. Es ist aber auch möglich, dass durch Spritzgießen nur ein Teil eines Formkörpers hergestellt wird und dieses Teil anschließend über übliche Fügetechniken, wie zum Beispiel Kleben, auf einen anderen Formkörper aufgebracht wird. Der so erhaltene Formkörper kann also auch Bereiche enthalten, welche nicht die erfindungsgemäße Metall-Polymerzusammensetzung aufweisen. Auf diese Art und Weise lassen sich schnell und günstig Formkörpers herstellen, welche eine lange Lebensdauer aufweisen und ein Großteil des eingebrachten Metalls als katalytische Zentren zur Verfügung stellen. Somit lässt sich schon mit geringen Metallanteilen eine effiziente Desodorierung bewerkstelligen. Besonders bevorzugt weist die Metall-Polymermischung oben angegebene Gew.-% Zusammensetzung auf.

In einer bevorzugten Ausführungsform des Verfahrens kann nach dem Spritzgießen zumindest ein Teil der Oberfläche des Formkörpers aufweisend die Mischung eines thermoplastischen Styrol-Blockcopolymers, eines Polypropylen Copolymers und eines eisenhaltigen Metallpulvers durch ein spanabhebendes Verfahren weiter bearbeitet werden. Überraschenderweise wurde festgestellt, dass sich die Effizienz des Formkörpers dadurch noch steigern lässt, indem die Oberfläche nach dem Spritzgussverfahren noch einem weiteren spanabhebenden Verfahren ausgesetzt wird. Anscheinend wird durch dieses Verfahren die Oberfläche des Formkörpers so modifiziert, dass die Eindiffusion der unerwünschten Duftstoffe in den Formkörper hinein erleichtert wird.

Weiterhin ist eine Verwendung des erfindungsgemäßen Formköpers zur Desodorierung der Luft, von Materialoberflächen oder der menschlichen Haut im Sinne der Erfindung. Die erfindungsgemäßen Formkörpers sind also in der Lage, unerwünschte Duftstoffe von Oberflächen, der Haut oder der Raumluft zu entfernen, ohne weitere nachteilige Substanzen an die Umgebung abzugeben. Die katalytisch aktiven Metalle verbleiben insbesondere im Formkörpers, so dass ein nachteiliger Effekt auf die Physiologie des Anwenders ausgeschlossen werden kann. Es ergibt sich in Summe also eine schonende und effiziente Reduzierung der unerwünschten Duftstoffe.

Zusätzlich ist auch ein Kit-of-parts zur Desodorierung der Luft, von Materialoberflächen oder der menschlichen Haut im Sinne der Erfindung, welches mindestens den erfindungsgemäßen Formköper, ein Behältnis zur Aufnahme des Formkörpers und eine Lösung zum Benetzen und/oder Eintauchen des Formkörpers umfasst.

Einige Ausführungsformen für erfindungsgemäße Ausgestaltung werden in den nachfolgenden Beispielen wiedergegeben. Es zeigen schematisch die
Fig. 1 einen Formkörper in Form einer flachen Scheibe, welcher nur an der Ober- und der Unterseite (schraffierten Flächen) die erfindungsgemäße Metall-Polymermischung aufweist.
Fig. 2 einen Formkörper in Form einer flachen Scheibe, welcher vollständig aus der erfindungsgemäßen Metall-Polymermischung besteht.

### Beispiele

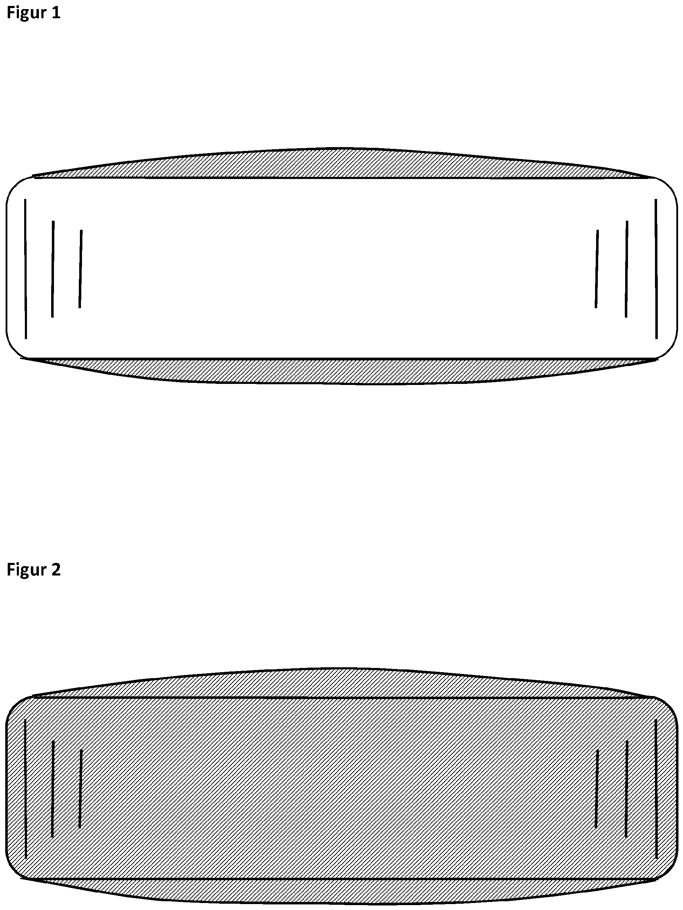

Es wird ein Metall-Polymergranulat hergestellt, welches aus 60 Gew.-% eines thermoplastischen Styrol-Blockcopolymers (Typ Lifoflex), 30 Gew.-% eines Polypropylen Copolymers (PPCopo) und 10 Gew.-% eines Edelstahlpulvers (Werkstoffnummer 1.4571) besteht. Dieses Granulat wird durch physikalisches Mischen und anschließendem Extrudieren unter Wärmezufuhr hegestellt. Das Granulat wird aufgeschmolzen und in einer handelsüblichen Spritzgussmaschine in eine Form nach der Figur 2 gebracht.

Zur Testung der Effizienz des erfindungsgemäßen Formkörpers werden von 10 Versuchspersonen jeweils zwei Knoblauchzehen geschält und kleingeschnitten. Anschließend werden die Hände für 60 Sekunden unter fließendem Wasser (25°C) mit und ohne Kontaktierung (jeweils 5 Personen) des erfindungsgemäßen Formkörpers gewaschen. Eine olfaktorische Testung der Handinnenflächen der 10 Versuchspersonen im Blindversuch ergibt, dass die Testpersonen ohne Kontaktierung des erfindungsgemäßen Formkörpers von 5 Testern zu 100% erkannt werden.

## Patentansprüche

1. Formkörper zur Desodorierung fester Oberflächen und/oder der Luft, **dadurch gekennzeichnet, dass** mindestens ein Teilbereich der Oberfläche des Formkörpers eine Metall-Polymermischung umfasst, wobei die Metall-Polymermischung
- größer oder gleich 40 Gew.-% und kleiner oder gleich 80 Gew.-% eines thermoplastischen Styrol-Blockcopolymers,
- größer oder gleich 10 Gew.-% und kleiner oder gleich 50 Gew.-% eines Polypropylen Copolymers und
- größer oder gleich 5 Gew.-% und kleiner oder gleich 30 Gew.-% eines eisenhaltigen Metalls aufweist und die Summe der angegebenen Komponenten der Metall-Polymermischung mindestens 80 Gew.-% beträgt.

2. Formkörper nach Anspruch 1, wobei das thermoplastische Styrol-Blockcopolymer ein Styrol-Ethylen-Butylen-Styrol-Blockcopolymer (SEBS) ist.

3. Formkörper nach einem der Ansprüche 1 oder 2, wobei das Metall als Metallpulver vorliegt und das Metallpulver größer oder gleich 50 Gew.-% und kleiner oder gleich 100 Gew.-% aus Edelstahl der Werkstoffnummern 1.4571, 1.4301 oder Mischungen daraus besteht.

4. Formkörper nach einem der vorhergehenden Ansprüche, wobei die Metall-Polymermischung
- größer oder gleich 40 Gew.-% und kleiner oder gleich 80 Gew.-% des thermoplastischen Styrol-Blockcopolymers,
- größer oder gleich 20 Gew.-% und kleiner oder gleich 40 Gew.-% des Polypropylen Copolymers und
- größer oder gleich 7,5 Gew.-% und kleiner oder gleich 15,0 Gew.-% eines eisenhaltigen Metalls enthält.

5. Formkörper nach einem der vorhergehenden Ansprüche, wobei die Dichte des gesamten Formkörpers oder des Teilbereiches der Oberfläche des Formkörpers aufweisend die Metall-Polymermischung ermittelt nach DIN EN ISO 1183-1 (A) größer oder gleich 0,75 g/cm³ und kleiner oder gleich 1,25 g/cm³ beträgt.

6. Formkörper nach einem der vorhergehenden Ansprüche, wobei der maximale Rauwert Rₐ der Oberfläche des Formköpers größer oder gleich 0,4 µm und kleiner oder gleich 25 µm beträgt.

7. Verfahren zur Herstellung eines Formkörpers zur Desodorierung der Luft und/oder von Oberflächen mindestens umfassend die Schritte
a) Herstellen einer physikalischen Mischung mindestens eines thermoplastischen Styrol-Blockcopolymers, eines Polypropylen Copolymers und eines eisenhaltigen Metallpulvers,
b) Aufschmelzen der physikalischen Mischung
c) Extrudieren der aufgeschmolzenen Mischung
d) Granulieren der erkalteten, extrudierten Mischung und
c) Formen eines Formkörpers oder eines Teiles eines Formköpers durch Spritzgießen des in Schritt d) erhaltenen Granulats.

8. Verfahren nach Anspruch 7, wobei nach dem Spritzgießen zumindest ein Teil der Oberfläche des Formkörpers aufweisend die Mischung eines thermoplastischen Styrol-Blockcopolymers, eines Polypropylen Copolymers und eines eisenhaltigen Metallpulvers durch ein spanabhebendes Verfahren weiter bearbeitet wird.

9. Verwendung des Formköpers nach einem der Ansprüche 1 bis 6 zur Desodorierung der Luft, von Materialoberflächen oder der menschlichen Haut.

10. Kit-of-parts zur Desodorierung der Luft, von Materialoberflächen oder der menschlichen Haut mindestens umfassend
- den Formköper nach einen der Ansprüche 1 bis 6,
- ein Behältnis zur Aufnahme des Formkörpers und
- eine Lösung zum Benetzen und/oder Eintauchen des Formkörpers.

## Claims

1. A molded body for deodorizing solid surfaces and/or the air, **characterized in that** at least a portion of the surface of the molded body comprises a metal/polymer mixture, the metal/polymer mixture comprising
- greater than or equal to 40 wt.% and less than or equal to 80 wt.% of a thermoplastic styrene block copolymer;
- greater than or equal to 10 wt.% and less than or equal to 50 wt.% of a polypropylene block copolymer, and
- greater than or equal to 5 wt.% and less than or equal to 30 wt.% of a ferriferous metal, the sum of the indicated components of the metal/polymer mixture being at least 80 wt.%.

2. The molded body according to claim 1, wherein the thermoplastic styrene block copolymer is a styrene ethylene butylene styrene (SEBS) block copolymer.

3. The molded body according to any one of claims 1 or 2, wherein the metal is present in the form of a metal powder, the metal powder comprising greater than or equal to 50 wt.% and less than or equal to 100 wt.% of stainless steel grade numbers 1.4571 and 1.4301 or mixtures thereof.

4. The molded body according to any one of the preceding claims, wherein the metal/polymer mixture comprises
- greater than or equal to 40 wt.% and less than or equal to 80 wt.% of the thermoplastic styrene block copolymer;
- greater than or equal to 20 wt.% and less than or equal to 40 wt.% of the polypropylene block copolymer, and
- greater than or equal to 7.5 wt.% and less than or equal to 15.0 wt.% of a ferriferous metal.

5. The molded body according to any one of the preceding claims, wherein the volumetric mass of the entire molded body or of the portion of the surface of the molded body comprising the metal/polymer mixture, ascertained according to DIN EN ISO 1183-1 (A), is greater than or equal to 0.75 g/cm³ and less than or equal to 1.25 g/cm³.

6. The molded body according to any one of the preceding claims, wherein the maximum roughness value Rₐ of the surface of the molded body is greater than or equal to 0.4 µm and less than or equal to 25 µm.

7. A method for producing a molded body for deodorizing the air and/or surfaces, at least comprising the following steps:
a) producing a physical mixture of at least one thermoplastic styrene block copolymer, a polypropylene block copolymer, and a ferriferous metal;
b) melting the physical mixture;
c) extruding the melted mixture;
d) granulating the cooled-down, extruded mixture; and
e) molding a molded body or a portion of a molded body by injection molding the granules obtained in step d).

8. The method according to claim 7, wherein, after the injection molding process, at least a portion of the surface of the molded body comprising the mixture of a thermoplastic styrene block copolymer, a polypropylene block copolymer, and a ferriferous metal is further processed by a machining method.

9. Use of the molded body according to any one of claims 1 to 6 for deodorizing the air, material surfaces or the human skin.

10. Kit-of-parts for deodorizing the air, material surfaces or the human skin, at least comprising:
- the molded body according to any one of claims 1 to 6;
- a receptacle for accommodating the molded body, and
- a solution for wetting and/or immersing the molded body.

## Revendications

1. Corps moulé destiné à la désodorisation de surfaces solides et/ou de l'air, **caractérisé en ce qu'**au moins une zone partielle de la surface du corps moulé comprend un mélange métal-polymère, où le mélange métal-polymère présente une quantité
- supérieure ou égale à 40 % en poids et inférieure ou égale à 80 % en poids d'un copolymère séquencé de styrène thermoplastique,
- supérieure ou égale à 10 % en poids et inférieure ou égale à 50 % en poids d'un copolymère de polypropylène, et
- supérieure ou égale à 5 % en poids et inférieure ou égale à 30 % en poids d'un métal contenant du fer, et la somme des composants indiqués du mélange métal-polymère est égale à au moins 80 % en poids.

2. Corps moulé selon la revendication 1, dans lequel le copolymère séquencé de styrène thermoplastique est un copolymère séquencé styrène-éthylène-butylène-styrène (SEBS).

3. Corps moulé selon l'une des revendications 1 ou 2, dans lequel le métal se présente sous forme de poudre métallique et la poudre métallique est constituée d'acier inoxydable des numéros de matières 1.4571, 1.4301 ou de mélanges de ceux-ci en une quantité supérieure ou égale à 50 % en poids et inférieure ou égale à 100 % en poids.

4. Corps moulé selon l'une des revendications précédentes, dans lequel le mélange métal-polymère contient une quantité
- supérieure ou égale à 40 % en poids et inférieure ou égale à 80 % en poids de copolymère séquencé de styrène thermoplastique,
- supérieure ou égale à 20 % en poids et inférieure ou égale à 40 % en poids de copolymère de polypropylène, et
- supérieure ou égale à 7'5 % en poids et inférieure ou égale à 15 % en poids d'un métal contenant du fer.

5. Corps moulé selon l'une des revendications précédentes, dans lequel la masse volumique du corps moulé entier ou de la zone partielle de la surface du corps moulé présentant le mélange métal-polymère déterminée selon la norme DIN EN ISO 1183-1 (A) est supérieure ou égale à 0,75 g/cm³ et inférieure ou égale à 1,25 g/cm³.

6. Corps moulé selon l'une des revendications précédentes, dans lequel la rugosité maximale Rₐ de la surface du corps moulé est supérieure ou égale à 0,4 µm et inférieure ou égale à 25 µm.

7. Procédé de fabrication d'un corps moulé destiné à la désodorisation de l'air et/ou de surfaces, comprenant au moins les étapes
a) de fabrication d'un mélange physique d'au moins un copolymère séquencé de styrène thermoplastique, un copolymère de polypropylène et d'une poudre métallique contenant du fer,
b) de fusion du mélange physique
c) d'extrusion du mélange fondu
d) de granulation du mélange extrudé refroidi, et
e) de façonnage d'un corps moulé ou d'une partie de corps moulé par un moulage par injection des granulés obtenus dans l'étape d).

8. Procédé selon la revendication 7, dans lequel, après le moulage par injection, au moins une partie de la surface du corps moulé présentant le mélange d'un copolymère séquencé de styrène thermoplastique, d'un copolymère de polypropylène et d'une poudre métallique contenant du fer est façonné ultérieurement par un procédé d'enlèvement de copeaux.

9. Utilisation du corps moulé selon l'une des revendications 1 à 6 pour la désodorisation de l'air, de surfaces de matières ou de la peau humaine.

10. Kit d'éléments pour la désodorisation de l'air, de surfaces de matières ou de la peau humaine comprenant au moins
- le corps moulé selon l'une des revendications 1 à 6,
- un récipient pour la réception du corps moulé, et
- une solution pour l'humidification et/ou l'immersion du corps moulé.
